Europäisches Patentamt

European Patent Office

Office européen des brevets

(11) Publication number: **0 359 796 B1**

# EUROPEAN PATENT SPECIFICATION

(45) Date of publication of patent specification: **15.09.93** (51) Int. Cl.⁵: **C08F 283/01**

(21) Application number: **89903003.5**

(22) Date of filing: **01.03.89**

(86) International application number:
**PCT/US89/00794**

(87) International publication number:
**WO 89/08670 (21.09.89 89/23)**

(54) **THERMOSETTING COMPOSITION FROM MALEIMIDE, OLEFINIC MONOMER AND UNSATURATED POLYESTER.**

(30) Priority: **07.03.88 US 167674**

(43) Date of publication of application:
**28.03.90 Bulletin 90/13**

(45) Publication of the grant of the patent:
**15.09.93 Bulletin 93/37**

(84) Designated Contracting States:
**DE FR GB IT**

(56) References cited:
**EP-A- 0 205 260**
**DE-A- 1 948 841**

**Chemical Abstracts, vol 81, no 2, 15 July 1974 (Columbus, Ohio, US), see p 18, abstract no 4497n**

**Chemical Abstracts, vol 77, no 8, 21 August 1972 (Columbus, Ohio, US), see page 54, abstract no 49514z**

**Database WPIL, no 87-139991, Derwent Pub-**

lications

(73) Proprietor: **Aristech Chemical Corporation**
**600 Grant Street**
**Pittsburgh, PA 15230-0250(US)**

(72) Inventor: **PIERMATTIE, Virginia**
**5340 Forbes Avenue**
**Pittsburgh, PA 15217(US)**
Inventor: **BROWNELL, George, L.**
**91 Woodhaven Drive**
**Pittsburgh, PA 15228(US)**

(74) Representative: **Patentanwälte Grünecker,**
**Kinkeldey, Stockmair & Partner**
**Maximilianstrasse 58**
**D-80538 München (DE)**

## Description

This invention relates to a thermosetting polymeric composition displaying enhanced physical properties and which is useful in high temperature environments, especially in and around electrical equipment.

It is known in the field that certain maleimides, which could also generally be classified as monomers in that they possess a structure of the 1,2-ethylenic type, will undergo free radical polymerization with certain other olefinic monomers. For example, N-phenylmaleimide undergoes a free radical polymerization reaction with styrene, an olefinic monomer widely used in plastics technology, to form a copolymer.

It has also been suggested that the attainment of improved structural stiffness and high thermal stability of certain polymers to which maleimides such as N-phenylmaleimides have been added is due to the inhibition of the rotation of the imide residue around the backbone of the macromolecule.

For example, N-phenylmaleimide used in acrylonitrile-butadiene-styrene systems has raised the heat distortion temperature of the resulting resin from 110°C to 125°C. See also U.S. Patent 3,676,404 for a disclosure of the use of N-phenyl maleimide with certain acrylic polymers.

U. S. Patent No. 4,173,595 describes thermosetting compositions prepared from bismaleimide and N-vinyl pyrrolidone, which can be further modified by the addition of unsaturated polyester, that result in cured systems displaying enhanced mechanical properties. See also U. S. Patent No. 4,376,206. However, a disadvantage of bismaleimide is that it is not as soluble in most ordinary olefinic monomers as is N-phenylmaleimide.

Copolymers of styrene and N-phenylmaleimide (NPM) are described in U. S. Patent No. 4,374,951. Similar copolymers are discussed in U. S. Patent No. 4,618,655, which discloses imidization of a copolymer of styrene and maleic anhydride. See also Japanese Patent Application 60-90960, which suggests a variety of co-monomers for N-phenylmaleimide and related compounds. Barrales-Rienda, Gonzalez de la Campa and Gonzalez Ramos, J. Macromol. Sci.-Chem., A11(2), pp. 267-286 (1977) recite several copolymerizations of N-phenylmaleimide and observe improved stiffness and thermal stability. Copolymerization of N-phenylmaleimide with styrene is also shown in U. S. Patent Nos. 4,374,951 and 4,604,438.

U.S. Patent 2,650,215 to Strain, and particularly Example IV thereof, mentions a more or less conventional unsaturated polyester composition which was reacted with N-ethyl maleimide. It should be noted that Example IV does not teach anything of its results and, in fact, is inconsistent with the main teaching of the patent. The reference is concerned with esters which are made from unsaturated alcohols - the entire body of the description is restricted to the use of such esters, and the polyesters used in Example IV are not made with such unsaturated alcohols, nor is the formulation of Example IV within the claims. No Barcol hardness or heat distortion data are given as for the other examples. N-phenylmaleimide is listed under Example I as having resulted in a shortened gelation time, but only in a mixture with diethylene glycol bis (allyl carbonate). There is no teaching whatever in the Strain patent with respect to electrical or heat resistant properties of unsaturated polyesters such as are employed in the present disclosure when copolymerized with N-phenylmaleimide. The unsaturated alcohols used for Strain's teaching are referred to in the three patents cited by Strain at column 4, lines 18-19.

Various synthesis routes or schemes have been used to make the N-phenylmaleimides which we employ in polyester formulations. See, for example, M. P. Cava et al, Organic Syntheses, Vol. V, p. 944, U. S. Patent Nos. 2,444,536 and 2,467,835. U.S. Patent No. 4,376,206 relates that bismaleimides can be used to make heat-resistant thermoset resins, and cites U.S. Patent No. 4,130,564 for a method of making maleimides and bismaleimides. A specific class of N-phenylmaleimides is disclosed in the '206 patent. See also U. S. Patent Nos. 3,960,887, 4,111,879, 4,171,302 and particularly 4,154,737.

In view of the prior art it is the object underlying the present invention to provide a thermosetting composition having excellent physical properties, such as an excellent dielectric strength, flex strength, tensile strength and elongation and break strength.

According to the present invention this object is attained with a thermosetting composition comprising

(a) 10 to 60 percent by weight of a polymerizable olefinic monomer,

(b) 1 to 40 percent by weight of N-phenylmaleimide and

(c) 5% to 89% unsaturated polyester, the total sum of the weight percentages of each compound (a), (b) and

(c) being 100%.

Preferred embodiments of the present invention are set out in the dependent claims.

The present invention does not depend on a particular way of making the N-phenylmaleimide component. Any convenient method of making it will suffice.

By way of illustration, the following preparation of N-phenylmaleimide is described:

To a solution of 202 g, of maleic anhydride in 600 ml of acetone is added with agitation a solution containing 186.26 g of aniline, 33 g of triethylamine and 200 ml of acetone. After adequate reaction time, 6 g of sodium acetate and 250 g of acetic anhydride are added and the mixture is brought to reflux for about 2.5 hours. 335 g of acetone is distilled from the mixture and approximately 1000 g of water is added to the remaining reaction contents. The reaction product is filtered, washed with water and dried to give 200 g of product (86.3% yield) m.p. 86°C.

The unsaturated polyester is prepared by polycondensation of polycarboxylic acid derivatives, one of which must be an alpha, beta-ethylenically unsaturated polycarboxylic acid, and polyols. Polycarboxylic acid derivatives include polycarboxylic acids, their esters of lower alcohols, their acid chlorides and their anhydrides.

The ratio of polycarboxylic acid to polyol is usually a 1:1 molar ratio. However, in most esterification processes, a slight excess of polyol is utilized to compensate for polyol losses during esterification. Also, although dicarboxylic acids and diols are most frequently utilized and the 1:1 molar ratio is prevalent, the utilization of e.g., triols requires the ratio of acid to polyol to be stated more precisely as one equivalent of acid per equivalent of polyol.

The unsaturated polyesters useful in this invention may be prepared from at acid mixture wherein the unsaturated polycarboxylic acid comprises as little as 20 mole percent of the total acids present, although it is generally preferred that the unsaturated polycarboxylic acid comprise about 30 percent or more of the total acid content.

Some of the unsaturated polycarboxylic acids useful in preparing unsaturated polyesters used in this invention include, for example :
Maleic acid
Fumaric acid
Itaconic acid
Mesaconic acid
Citraconic acid
Glutaconic acid
Chloromaleic acid
wherein the term "acid" is used to include the corresponding anhydrides where such anhydrides exist.

Some of the saturated and aromatically unsaturated polycarboxylic acids optionally useful in preparing unsaturated polyesters used in this invention include, for example :
Phthalic acid
Tetrahydrophthalic acid
Endomethylene tetrahydrophthalic acid
Tetrachlorophthalic acid
Hexachloroendomethylene
Succinic acid
Adipic acid
Isophathalic acid
Hexahydrophthalic acid
Glutaric acid
tetrahydrophthalic acid
Suberic acid
Sebacic acid
wherein the term "acid" includes the corresponding anhyrides where such anhydrides exist. The $>C=C<$ groups of the aromatic unsaturated polycarboxylic acids are relatively unreactive and do not participate to any substantial degree in polymerization reactions occurring between the unsaturation groups of the polyester, as provided by the alpha, beta-ethylenically unsaturated acid present, such as maleic acid, and the ethylenically unsaturated monomer, such as styrene as described elsewhere herein.

Polyols useful in preparing polyesters for use in this invention are polyfunctional alcohols of the type conventionally utilized in polyester preparation. Such polyols include, for example :
Ethylene glycol
Propylene glycol
Butylene glycol
Diethylene glycol
Trimethylolpropane
Dipropylene glycol
Neopentyl glycol

3

2,2-bis(4-hydroxyphenyl)propane
1,5 propanediol
Triethylene glycol
Glycerol
1,4,6-hexanetriol
Trimethylolethane
Pentaerythritol

Although diols are generally preferred in the preparation of unsaturated polyesters, the more functional polyols, i.e., polyols having a functionality of about four, are frequently used.

The present composition also contains a polymerizable olefinic-type monomer. Unsaturated polyesters are commonly used in the form of solutions in such monomers. Olefinic monomers may be, for example, vinyl substituted mononuclear aromatic hydrocarbons and halo and alkyl derivatives thereof, alkyl esters of alpha, beta-ethylenically unsaturated monocarboxylic acids and halo derivatives thereof, and allyl esters and ethers, the following examplary compounds being illustrative:

Styrene
Alpha-methyl styrene
Para-methyl styrene
Methyl methacrylate
Diallyl phthalate
Diester of phthalic acid and the diallyl ether of trimethylol propane
Vinyl toluene
Divinyl benzene
Dichlorostyrene
Triallyl cyanurate

Formulations containing the desired amounts of specified components can be prepared by producing an intimate mixture of the constituents. It is possible to produce a solution of the maleimide and unsaturated polyester in olefinic monomer, if necessary while heating so as to facilitate the formation of an homogeneous liquid composition.

The liquid composition can be used as is whereupon it is subsequently cured by heating and if appropriate with the use of a catalyst such as a peroxide. Typical polymerization catalysts for initiating and catalyzing polymerization between an unsaturated polyester and an unsaturated monomer used in preparing polyester resins useful in this invention include, for example :

Benzoyl peroxide
2,4-dichlorobenzoyl peroxide
Caprylyl peroxide
Methyl ethyl ketone peroxide
Cumene hydroperoxide
Di-t-butyl peroxide
Lauroyl peroxide
Acetyl peroxide
t-Butyl hydroperoxide

The present composition is useful for the manufacture of molded articles, for the impregnation of electrical coils, and for encasing electrical components.

In a preferred thermosetting composition of the present invention the N-phenylmaleimide is present in an amount from 1% to 20% of the overall composition, most preferably from 5 to 20% the polyester is present in an amount of 40 to 89% of the overall composition, most preferably from 40 to 80% and the polymerizable monomer is vinyl toluene and present in an amount of 10% to 40% of the overall composition. This composition was found to have a considerably improved heat distortion temperature under load as compared to a similar composition not containing N-phenylmaleimide. Same was found for a composition comprising 10 to 40% styrene instead of vinyl toluene, also having an excellent dielectric strength stability.

EXAMPLE I

A 500g solution composed of 30% by weight vinyl toluene and 70% of unsaturated resin was prepared. The unsaturated polyester resin was made from maleic anhydride, isophthalic acid, neopentyl glycol and Esterdiol-204 (Union Carbide 2,2-dimethyl-3-hydroxypropyl-2,2-dimethyl-3-hydroxypropionate). The weight ratio maleic anhydride/isophthalic was 70/30 and the weight ratio neopentyl glycol/Esterdiol-204 was 5/95.

4

The molecular weight of this polyester was about 6000. The viscosity of the solution thinned with the vinyl toluene was 1175 mPa•s (cp). SPI (benzoyl peroxide paste 82.5°C) gel was 4 min; interval 2.5 min and peak temperature 188°C. To this solution was intimately mixed 55 g of N-phenylmaleimide. The viscosity of the resulting formulation was 1375 mPa•s(cp) and SPI (benzoyl peroxide paste 82.5°C) gel was 1.5 min; interval 1 min and peak temperature 196°C.

This resin formulation was incorporated into a glass-filled laminate and subjected to dielectric strength testing according to ASTM D149 (incorporated herein by reference) during a heat-aging cycle at 255°C. The laminate displayed approximately a 130-h increase in heat stability for dielectric strength as compared to a similar formulation containing no N-phenylmaleimide, that is, in accordance with the test procedure, the time required in the heat-aging cycle to reach 50% of its original dielectric strength was increased by 130 hours.

EXAMPLE II

A 1500 g solution composed of 30% by weight vinyl toluene and 70% of unsaturated resin was prepared. The unsaturated polyester resin was made from a major amount of isophthalic acid, adipic acid, maleic anhydride, and, as the glycol, diethylene glycol. The molecular weight of this polyester was about 4800. The polydispersity was 1.86. The viscosity of the thinned solution was 1150 mPa•s(cp). SPI (Lupersol® 256 82.5°C) gel was 5.24 minutes; interval 8.27 min and peak temperature 145°C. To this solution was intimately mixed 165 g of N-phenylmaleimide. The viscosity of the resulting formulation was 1210 mPa•s(cp), and the SPI (Lupersol® 256, 82.5°C) gel was 1.22 min; interval 2.18 min and peak temperature is 164°C.

Physical properties measured on unreinforced castings of this formulation are compared to those of a similar formulation that contains no N-phenylmaleimide.

|  | Example II | Formulation without N-phenylmaleimide |
|---|---|---|
| Flex Modulus, (psi) | (69,500) 479 kN/m$^2$ | (17,700) 122 kN/m$^2$ |
| Tensile Strength, (psi) | (2321) 16.0 kN/m$^2$ | (1479) 10.2 kN/m$^2$ |
| Tensile Modulus, (psi) | (48,400) 334 kN/m$^2$ | (14,000) 96.5 kN/m$^2$ |
| Elongation, Break, (psi) | (59.1) 0.41 kN/m$^2$ | (54.7) 0.38 kN/m$^2$ |

This resin formulation was also incorporated into a glass-filled laminate and subjected to dielectric strength testing according to ASTM D 149 during a heat-aging cycle at 255°C. The laminate displayed approximatly a 325-h increase in heat stability for dielectric strength as compared to a similar formulation containing no N-phenylmaleimide.

EXAMPLE III

A solution composed of 30% by weight vinyl toluene and 70% of unsaturated polyester resin was prepared. The polyester resin was made from maleic anhydride, isophthalic acid, neopentyl glycol and 2,2-dimethyl-3-hydroxypropyl-2,2-dimethyl-3-hydroxypropionate. The weight ratio of maleic anhdyride/isophthalic acid was 92/8 and the weight ratio neopentyl glycol/2,2-dimethyl-3-hydroxypropyl-2,2-dimethyl-3-hydroxypropionate was 3.6/96.4. The molecular weight of this polyester was about 8800. The viscosity of the solution thinned with the vinyl tolune was 2675 mPa•s(cp). SPI (benzoyl peroxide paste, 82.5°C) gel is 11.8 min; interval 2.66 min and peak temperature 170°C. To this solution was added enough N-phenylmaleimide to give a resulting formulation of composition 68% polyester resin, 29% vinyl toluene and 3% N-phenylmaleimide. SPI (benzoyl peroxide paste, 82.5°C) gel was 6.5 minutes; interval 2.5 min and peak temperature 170°C.

EXAMPLE IV

A solution composed of 31.5-34.5% by weight styrene and 68.5-65.5% by weight unsaturated polyester resin was prepared. The unsaturated polyester resin was made from maleic anhydride, isophthalic acid and diethylene gylcol. The viscosity of the solution was 1400-1600 mPa•s(cp). The acid number ranged between 20-25. SPI (50% benzoyl peroxide paste, 82.5°C) gel was 6-7 min; interval 1.5-2.5 min and peak temperature was 196-218°C. Physical properties measured on a 32 mm (1/8") clear casting are listed on Table A.

### EXAMPLE V

To the solution described in Example IV was added enough N-phenylmaleimide to produce a formulation which contained a final concentration of 10% by weight. SPI gel was 2.6 min, interval 3.5 min and peak temperature was 226°C. Physical properties measured on a 32 mm 1/8" clear casting are listed on Table A.

### EXAMPLE VI

A solution composed of 41-43% by weight styrene and 59-57% by weight unsaturated polyester resin was formulated. The unsaturated polyester resin was prepared with maleic anhydride, isophthalic acid and propylene glycol. The viscosity of the solution was 600-700 mPa•s(cp). Acid number ranged from 3-10. SPI gel (50% benzoyl peroxide paste, 82.5°C) was 5-7 min; interval 2-3 min and peak temperature was 212.8-235°C. Physical properties measured on a 32 mm (1/8") clear casting are listed on Table A.

### EXAMPLE VII

The unsaturated polyester resin solution from Example VI was taken and mixed with N-phenylmaleimide in the amount of 10% by weight. Physical properties were measured on a 32 mm (1/8") clear casting and listed on Table A.

### EXAMPLE VIII

A solution composed of 36.5-38.5% by weight styrene and 63-61.5% by weight unsaturated polyester resin was prepared. The unsaturated polyester resin was made from phthalic anhydride, maleic anhydride, propylene gylcol and diethylene glycol. The viscosity of the solution was 450-510 mPa•s (cp). The acid number ranged from 18-22. SPI gel was 4.5-5 min; interval 2-3 min and peak temperature was 187-204°C. Physical properties measured on a 32 mm (1/8") clear casting are listed on Table B.

### EXAMPLE IX

To the solution described in Example XIII was added enough N-phenylmaleimide to produce a formulation which contained a final concentration of 10% by weight. Physical properties measured on a 32 mm (1/8")clear casting are listed on Table B.

### TABLE A

| | BREAK STRENGTH kN/m$^2$ (psi) | ELONGATION % | TENSILE MODULUS MN/m$^2$ (psi) | FLEX MODULUS MN/m$^2$ (psi) | FLEX STRENGTH kN/m$^2$ (psi) | DTUL* °C |
|---|---|---|---|---|---|---|
| Ex. IV | 78.5 (11384) | 4.81 | 3.47 (5.03x10$^5$) | 3.35 (4.86x10$^5$) | --- | 58.3 |
| Ex. V | 70.0 (10157) | 3.49 | 3.34 (4.85x10$^5$) | 3.50 (5.07x10$^5$) | --- | 65 |
| Ex. VI | 35.3 (5116) | 0.96 | 3.87 (5.62x10$^5$) | 3.74 (5.42x10$^5$) | 114.4 (16597) | 106.8 |
| Ex. VII | 40.2 (5833) | 1.06 | 4.02 (5.83x10$^5$) | 3.96 (5.74x10$^5$) | 95.2 (13813) | 111.1 |

* Distortion temperature under load, according to ASTM procedure D 648

**TABLE B**

| | BREAK STRENGTH kN/m$^2$ (psi) | ELONGATION % | TENSILE MODULUS MN/m$^2$ (psi) | FLEX MODULUS MN/m$^2$ (psi) | FLEX STRENGTH kN/m$^2$ (psi) | DTUL* °C |
|---|---|---|---|---|---|---|
| Ex.VIII | 81.9 (11877) | 2.27 | 3.99 ($5.78 \times 10^5$) | 4.43 ($6.42 \times 10^5$) | 98.3 (14258) | 67.2 |
| Ex.IX | 59.9 (8684) | 1.44 | 4.31 ($6.25 \times 10^5$) | 4.05 ($5.88 \times 10^5$) | 98.5 (14283) | 77.2 |

| | IZOD IMPACT FR-16 . | Tg °C |
|---|---|---|
| Ex.VIII | 0.45 | 69 |
| Ex. IX | 0.52 | 81 |

\* Distortion temperature under load, according to ASTM procedure D 648

## Claims

1. A thermosetting composition comprising
   (a) 10 to 60 percent by weight of a polymerizable olefinic monomer,
   (b) 1 to 40 percent by weight of N-phenylmaleimide and
   (c) 5% to 89% unsaturated polyester, the total sum of the weight percentages of each compound (a), (b) and (c) being 100%.

2. The composition of claim 1 wherein the polymerizable olefinic monomer comprises vinyl toluene.

3. The composition of claim 1 wherein the polymerizable olefinic monomer comprises styrene.

4. The composition of claim 1 comprising, by weight,
   (a) 10% to 40% of vinyl toluene,
   (b) 1% to 20% of N-phenyl-maleimide, and
   (c) 40% to 89% of an unsaturated polyester resin.

5. The composition of claim 1 comprising, by weight,
   (a) 10% to 40% of styrene
   (b) 1% to 20% of N-phenylmaleimide
   (c) 40% to 89% of an unsaturated polyester resin.

## Patentansprüche

1. Wärmehärtende Zusammensetzung, umfassend
   (a) 10 bis 60 Gew.-% eines polymerisierbaren Olefinmonomers,
   (b) 1 bis 40 Gew.-% N-Phenylmaleimid und
   (c) 5 % bis 89 % eines ungesättigten Polyesters, wobei die Gesamtsumme der Gewichtsprozente jeder der Verbindungen (a), (b) und (c) 100 % beträgt.

2. Zusammensetzung nach Anspruch 1, worin das polymerisierbare Olefinmonomer Vinyltoluol umfaßt.

7

**3.** Zusammensetzung nach Anspruch 1, worin das polymerisierbare Olefinmonomer Styrol umfaßt.

**4.** Zusammensetzung nach Anspruch 1, die, bezogen auf das Gewicht,
   (a) 10 % bis 40 % Vinyltoluol,
   (b) 1 % bis 20 % N-Phenylmaleimid und
   (c) 40 % bis 89 % eines ungesättigten Polyesterharzes umfaßt.

**5.** Zusammensetzung nach Anspruch 1, die, bezogen auf das Gewicht,
   (a) 10 % bis 40 % Styrol,
   (b) 1 % bis 20 % N-Phenylmaleimid und
   (c) 40 % bis 89 % eines ungesättigten Polyesterharzes
umfaßt.

**Revendications**

**1.** Composition thermodurcissable comprenant :
   (a) 10 à 60 % en poids d'un monomère oléfinique polymérisable,
   (b) 1 à 40 % en poids de N-phénylmaléimide et
   (c) 5 à 89 % d'un polyester insaturé, la somme totale des pourcentages en poids des composants
   (a), (b) et (c) étant de 100 %.

**2.** Composition selon la revendication 1, dans laquelle le monomère oléfinique polymérisable comprend le vinyltoluène.

**3.** Composition selon la revendication 1, dans laquelle le monomère oléfinique polymérisable comprend le styrène.

**4.** Composition selon la revendication 1, comprenant, en poids,
   (a) 10 à 40 % de vinyltoluène,
   (b) 1 à 20 % de N-phénylmaléimide, et
   (c) 40 à 89 % d'une résine de polyester insaturé.

**5.** Composition selon la revendication 1, comprenant, en poids,
   (a) 10 à 40 % de styrène,
   (b) 1 à 20 % de N-phénylmaléimide,
   (c) 40 à 89 % d'une résine de polyester insaturé.